# FASCICULE DE BREVET EUROPEEN

(11) **EP 0 475 837 B1**
(45) Date de publication et mention de la délivrance du brevet: **11.08.1993**
(21) Numéro de dépôt: 91402408.8
(22) Date de dépôt: 10.09.1991
(51) Int. Cl.: G07F 7/10, G06K 19/06

(54) **Procédé de gestion d'un programme d'application chargé dans un support à microcircuit**
Verfahren zur Verwaltung eines in einem Mikroschaltungsdatenträger gespeicherten Anwenderprogramm
Method of managing an application program stored in an IC card

(30) Priorité: 12.09.1990 FR 9011293
(43) Date de publication de la demande: 18.03.1992
(73) Titulaire: GEMPLUS CARD INTERNATIONAL, F-13420 Gémenos (FR)
(72) Inventeur: Geronimi, François, F-75116 Paris (FR)
(74) Mandataire: Schmit, Christian Norbert Marie

(56) Documents cités:
- EP-A- 0 030 381
- EP-A- 0 299 826
- FR-A- 2 503 423
- COMMUNICATIONS OF THE ASSOCIATION FOR COMPUTING MACHINERY. vol. 21, no. 2, Février 1978, NEW YORK US pages 120 - 126; R.L. RIVEST ET AL.: 'A method for obtaining digital signatures and public key cryptosystems'

## Description

La présente invention a pour objet un procédé de gestion d'un programme d'application chargé dans un support à microcircuit. Dans une utilisation préférée, le support à microcircuit est une carte dite à puce électronique utilisable dans le domaine bancaire ainsi que pour de nombreuses autres transactions. L'invention vise à mettre à la disposition de nombreux services dits émetteurs, de tels supports à microcircuit parce qu'ils permettent, avec l'intelligence électronique qu'ils emportent, de simplifier la gestion de ces services.

Un support à microcircuit comporte d'une part un support, souvent constitué sous la forme d'une carte comme les cartes de crédit, et d'autre part un circuit électronique muni, à la surface du support, de moyens de communiquer avec le monde extérieur. Souvent ces moyens de communication sont de simples surfaces métallisées reliées par ailleurs au microcircuit et autorisant des contacts électriques. Cependant, il est possible d'organiser une relation entre le monde extérieur et le microcircuit électronique qui soit sans contact électrique : par exemple, par l'intermédiaire d'émission électromagnétiques.

Dans sa définition la plus générale un microcircuit du type de celui utilisé dans les cartes à puces comporte d'une part un microprocesseur qui est le véritable moteur de la carte, et d'autre part un ensemble de mémoires ayant des fonctions différentes. On peut admettre qu'un tel microcircuit comporte ainsi trois types de mémoire, encore que les fonctionnalités et les technologies de ces mémoires puissent être mêlées au point que la distinction de ces mémoires puisse être difficile. Cependant, on peut noter l'existence d'une mémoire vive de travail, dite RAM, dont la technologie est souvent de type statique ou dynamique. Un microcircuit comporte également une mémoire morte, dite ROM ou encore mémoire programme, contenant le programme d'application. Normalement cette mémoire ROM ne peut être programmable extérieurement par l'utilisateur et doit avoir été programmée, soit par masque par le fabricant du microcircuit soit par l'émetteur de la carte avant que cet émetteur n'empêche ultérieurement (en général par rupture d'un fusible) l'accès en écriture à cette mémoire morte ROM. Comme troisième type de mémoire, on connaît l'existence de mémoire programmable et effaçable électriquement, par exemple du type EEPROM ou du type FLASH EPROM. Ces dernières mémoires inscriptibles permettent d'entrer des données relatives à l'application : nombres, dates et heures des utilisations de la carte pour l'application concernée, dates et montants prélevés sur le compte en banque, plus généralement données relatives à la transaction. Les mémoires ROM et EPROM sont normalement non volatiles.

Normalement le microprocesseur est apte à exécuter les programmes d'applications contenus dans la mémoire ROM, soit en allant directement lire les instructions à exécuter dans cette mémoire, soit en ayant provoqué au préalable le transfert de ces instructions dans la mémoire RAM et en les exécutant depuis cette mémoire RAM elle même. On connaît ainsi deux types de microprocesseur. Le premier type possède une instruction susceptible d'aller initialiser l'exécution du programme sur la première instruction contenue dans la mémoire ROM. Le second possède une instruction susceptible de provoquer ce transfert. Les deux types peuvent coexister sur un microcircuit. Dans ce cas une de ces fonctionnalités peut éventuellement être neutralisée.

On distingue plusieurs intervenants dans le phénomène d'utilisation des cartes à microcircuit. D'une part il existe des fabricants de microcircuits. D'autre part, il existe des émetteurs de carte, et enfin il existe des utilisateurs de carte. Les fonctionnalités des cartes sont réduites au fur et à mesure qu'elles s'adressent à des intervenants situés de plus en plus en aval dans cette chaîne. Ceci signifie que chez le fabricant du microcircuit, le microcircuit électronique possède, potentiellement, toute la puissance possible de programmation interne. On peut résumer l'existence de cette puissance en disant qu'aucun des fusibles de limitation d'accès n'est encore rompu. Cependant, dans le cas où il ne s'agira pas de fusible, on admettra que chez le fabricant cette puissance potentielle n'est pas non plus limitée par un jeu d'instructions de programmation, propre au microprocesseur.

Les émetteurs des cartes, par exemple les banques, demandent en général au fabricant du microcircuit de programmer d'une manière indélébile, soit par masque dans une mémoire morte ROM, soit par programmation logicielle et par rupture ultérieure du fusible d'accès en écriture dans une mémoire de type EPROM, les applications dont elles ont besoin, et dont elles veulent que leurs clients soient en possession. Ceci a comme première conséquence que la fonctionnalité du microcircuit est figée, son utilisation est limitée à l'application envisagée. Cependant, la banque peut imaginer pour développer sa relation avec sa clientèle de donner d'autres fonctionnalités à la carte. Elle ne peut alors le faire, si ce n'est en se tournant vers le fabricant, et en lui demandant de réaliser d'autres cartes avec d'autres masques. Ce processus est long et peu souple.

Ce mode de fabrication a un autre inconvénient lié au fait que des autres services, par exemple des organismes sociaux de santé, des sociétés de gestion d'un parc de stationnement, doivent adopter un même mode de programmation. Ce même mode de programmation revenant à faire porter la charge de la programmation des applications dans les microcircuits sur le fabricant du microcircuit.

Si on procédait autrement il y aurait un risque. Ce premier risque serait de voir un marchand de service simuler, avec ses outils de programmation des microcircuits, des services d'un autre marchand. Par exemple, une société de gestion de parking pourrait, frauduleusement, tenter de simuler une application bancaire. Ce risque se situerait aussi chez les fabricants. Des négligences au moment de la fabrication ou de la livraison des microcircuits vierges aux émetteurs pourrait conduire à mettre à la disposition d'acteurs mal intentionnés des microcircuits programmables auxquels il serait possible de faire adopter, en partie seulement, des fonctionnalités d'une carte particulière, et de lui attribuer en plus des fonctionnalités qui normalement lui seraient interdites.

Pour remédier à ces inconvénients, il est déjà connu d'une part, comme évoqué ci-dessus, de faire charger par le fabricant l'application dans une mémoire ROM. L'application est figée dès l'origine et ne peut plus être modifiée par un quelconque moyen. Il est connu aussi la possibilité de charger des programmes d'applications dans des mémoires programmables et de limiter ultérieurement l'accès en programmation à ces mémoires programmables par rupture d'un fusible. On comprend que le deuxième type de programmation reçoive un accueil favorable de la part des émetteurs parce qu'il est plus souple d'utilisation. On comprend également que cette manière de faire est cependant plus dangereuse pour les autres émetteurs. En effet, bien que le fabricant a pu limiter la potentialité du circuit cette limitation peut d'une manière perverse être contournée.

Dans l'invention, on propose de résoudre ce problème en demandant à l'application de se protéger elle-même. Pour ce faire on inclut en plus dans cette application un programme de chiffrement chargé d'établir une signature sur la base, d'une part, d'un code secret propre à la carte, et d'autre part, des instructions du programme d'utilisation lui-même. Si ce programme de chiffrement n'est pas inclus dans l'application elle même il existe néanmoins, et doit être lancé, périodiquement, par le microprocesseur. Son action porte sur les instructions de l'application. Cette signature est alors elle-même chargée dans la mémoire de données de la carte. Cette signature est donc tout à fait lisible dans cette mémoire. La carte comporte ainsi, dans sa mémoire de données le code secret et la signature. La carte comporte dans sa mémoire programme, d'une part le programme d'application (toutes les instructions de ce programme), et d'autre part un algorithme de chiffrement identique à celui avec lequel a été élaboré la signature. L'application peut être stockée dans une mémoire programmable et effaçable. L'algorithme de chiffrement n'est stocké qu'en mémoire morte non programmable. La fonctionnalité de cet algorithme est limitée au calcul de la signature, il ne peut pas provoquer l'écriture de cette signature dans la mémoire de données.

Quand on veut utiliser la carte il suffit alors, à chaque utilisation de vérifier que le calcul à nouveau de la signature, sur la base des instructions du programme et du code secret, est bien égal à la signature déjà enregistrée. Dans ces conditions, il est possible de mettre à la disposition de tous les émetteurs toute la potentialité des cartes et aucun de ceux-ci ne peut par négligence ou par mauvaise intention, simuler partiellement l'application d'un autre : il est obligé de la simuler au moins en totalité. Quand elle est simulée en totalité, elle présente moins de risque puisque l'utilisation doit être conforme à celle qui a été attribuée par l'émetteur.

Pour rendre le système encore plus performant, il peut être envisagé de faire intervenir, dans le processus de vérification, le lecteur avec lequel la carte est en relation de communication. En effet, l'algorithme de chiffrement prend en compte les unes après les autres les informations binaires contenues dans les instructions du programme d'application. Avec cette suite d'instructions et avec le code secret, il calcule la signature. Il est cependant possible d'introduire, de la part du lecteur, au cours de ce chiffrement, une autre suite binaire tendant à modifier la signature, sous réserve que cette suite binaire ait été également entrée au moment de l'insertion de la signature dans la carte. On constate qu'on sécurise complètement l'application d'une part par le code secret de la carte, d'autre part par la limitation des instructions du programme d'application strictement respecté et enfin par l'intervention de l'émetteur de la carte.

Dans ce dernier cas, il est même possible de modifier la signature. Cette modification est à l'initiative de l'émetteur. Il peut décider par exemple, qu'à compter d'une certaine date la suite binaire introduite par les lecteurs sera différente. Lors de la première insertion d'une carte dans un lecteur, suite à cette décision de modification, le lecteur reconnaît l'existence de l'ancienne signature et, après validation de la carte, et selon un protocole sécurisé, ce lecteur reprogramme dans la carte une nouvelle signature, qui servira pour les vérifications ultérieures.

On peut citer comme état de la technique la demande de brevet européen 88 401645.2, qui concerne un procédé d'authentification de cartes à mémoire électronique pour permettre l'accès à des biens ou services.

L'invention a elle pour objet un procédé de gestion d'un programme d'application chargé dans un support à microcircuit . Ce procédé comporte les étapes suivantes :
a) on élabore pour charger le programme d'application une signature chiffrée fonction d'un code secret du microcircuit et de certaines instructions du programme ;
   - on charge cette signature dans une mémoire programmable du microcircuit ;
   - on charge le programme dans une mémoire programme du microcircuit;
b) quand le programme d'application doit être exécuté:
   - on fait élaborer par le microprocesseur du microcircuit, avant l'exécution du programme d'application, une autre signature chiffrée;
   - on compare cette signature chiffrée; et
   - on autorise le déroulement du programme en fonction du résultat de cette comparaison.

L'invention sera mieux comprise à la lecture de la description qui suit et à l'examen des figures qui l'accompagnent. Celles-ci ne sont données qu'à titre indicatif et nullement limitatif de l'invention.

Les figures montrent:
- Figure 1, un schéma fonctionnel du système de gestion de la carte selon l'invention ;
- Figure 2 : la suite logique des phases du procédé de gestion de l'invention.

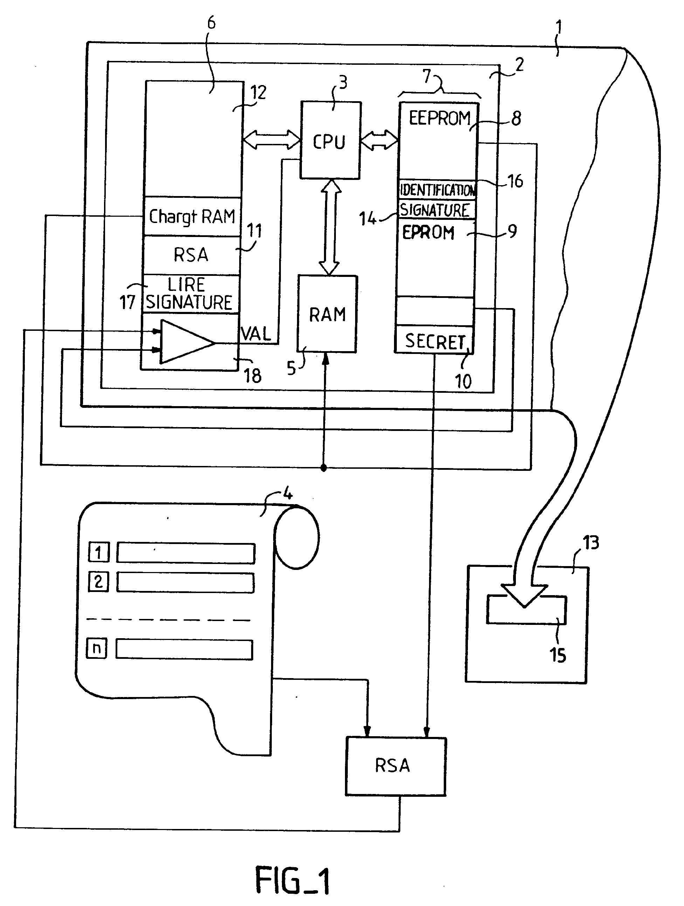

La figure 1 montre schématiquement le système de gestion utilisable pour mettre en oeuvre le procédé de l'invention. Elle montre un support 1 contenant un microcircuit 2. Dans une application courante le support 1 est une carte à puce en plastique, le microcircuit 2 est un circuit électronique. Le microcircuit 2 comporte des moyens non représentés de communication avec le monde extérieur, et un microprocesseur 3 apte à travailler sous le contrôle d'un programme 4 chargé dans une mémoire vive 5 à accès aléatoire, dans une mémoire morte 6 préprogrammée, ou dans une mémoire inscriptible 7 (dans une partie 9 qui ne peut plus être écrite de cette mémoire 7, ou au contraire dans une partie 8 dans laquelle on peut écrire et effacer en permanence). On va décrire le cas où l'application est stockée dans une mémoire morte 6 puis chargée dans une mémoire vive 5 pour son exécution. Cependant, l'invention est tout à fait applicable, lorsque le programme exécutable est exécuté directement à partir de la mémoire où il est stocké, mémoire 6 ou mémoire 7, sans être transféré à la mémoire vive 5. Dans ce cas, le microprocesseur 3, par son fonctionnement interne, sait qu'il lui est possible d'aller chercher les instructions dans de telles mémoires. Dans le cas présent, au moment du démarrage, le microprocesseur, charge tout ou partie du programme exécutable dans la mémoire RAM 5.

En plus de la fonction "chargement RAM" de chargement du programme d'application, le programme principal du microprocesseur comporte une autre fonction de type algorithmique (de type RSA ou DES) obligatoire tendant à lui faire mettre en oeuvre la vérification de l'invention. Il n'est donc pas possible d'y échapper.

Dans les parties enregistrables 9 de la mémoire 7, a été enregistré un code secret de la carte. Ce code secret est enregistré dans la carte par l'émetteur du programme d'application. Il n'est pas accessible en lecture pour être visualisé ou transféré sur un bus d'entrée-sortie de la carte. Il est seulement accessible d'une manière interne : le microprocesseur peut faire des calculs avec ce code secret. Le code secret est stocké dans une région 10 complètement inaccessible par des voies extérieures de la mémoire 7 (ou éventuellement de la mémoire 6).

Au moment où l'émetteur veut mettre en service les cartes, il charge dans la carte le code secret. L'émetteur connaît d'autre part l'identification de la carte : il s'agit de son numéro de fabrication ou de son numéro de série. Enfin l'émetteur connaît également le programme 4 qu'il veut introduire dans le microcircuit 2. Ce programme, dans l'exemple décrit, est stocké dans une région 12 de la mémoire 6. Dans une région 11 de cette mémoire 6 est stocké un algorithme de chiffrement du type RSA. L'algorithme de chiffrement de type RSA est connu et est publié dans Communication of the ACM, Vol 21, 1978, pp 120-126 dans un article intitulé "A method for obtaining digital signatures and Public-key cryptosystems" dû à MM RIVEST R.L., SHAMIR A and ADLEMAN L.M.

L'invention peut, bien entendu, être mise en oeuvre avec d'autres algorithmes de chiffrement que cet algorithme là. En particulier, dans un même but on connaît un autre algorithme dit DES.

Ces algorithmes consistent pour l'essentiel à calculer une signature à partir d'un certain nombre de données qui leurs sont communiquées. Dans l'invention, les données qui sont communiquées sont le code secret de la carte, éventuellement l'identification, mais surtout les n instructions du programme 4. Ces instructions peuvent être considérées comme des données puisque pour le calcul de la signature seule leur allure de suites binaires est prise en compte. Il est à noter cependant qu'il n'est pas nécessaire d'introduire au moment de l'opération de chiffrement toutes les instructions du programme 4 dans cet algorithme. On peut par exemple décider d'en prendre une sur deux seulement, ou bien une seulement, ou encore toute autre combinaison que l'on voudra. Ceci doit être prévu pour l'exécution de l'algorithme RSA qui va chercher des données, au fur et à mesure de son déroulement, là où on lui a indiqué de les prendre. Lorsqu'il est question de changer la signature, plutôt que d'entrer une donnée extérieure à la carte par un lecteur 13 qui est destiné à la recevoir, il peut être décidé d'élaborer une nouvelle signature sur la base d'autres instructions contenues dans les n instructions du programme 4, ou bien sur les mêmes instructions mais prises selon un ordre différent que l'ordre dans lequel elles avaient été rangées.

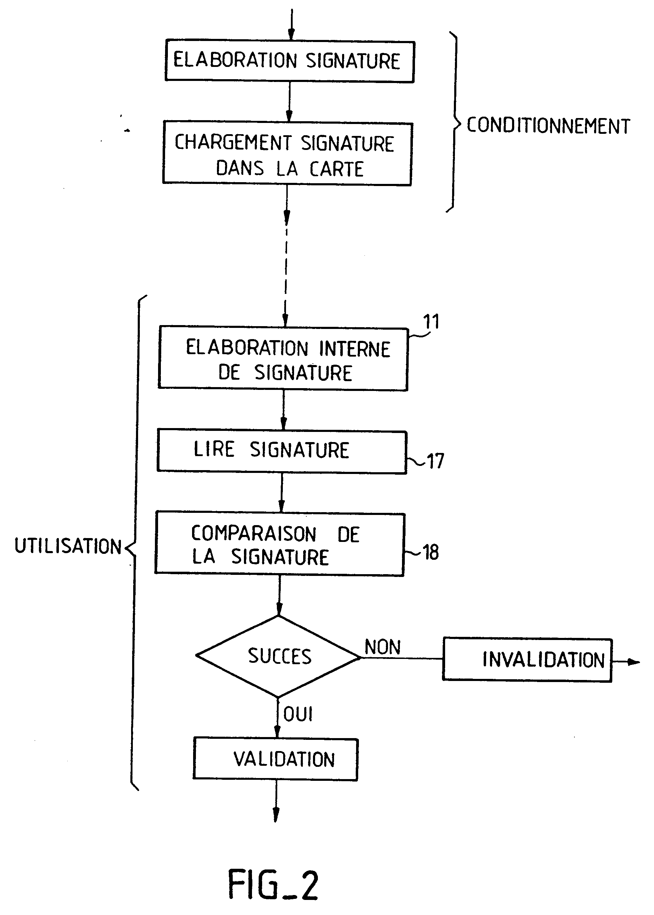

La figure 2 permet de bien comprendre le fonctionnement de l'invention. Au moment du conditionnement de la carte, nanti de toutes les informations utiles, notamment les instructions 1 à n du programme 4, on calcule la signature en exécutant, extérieurement à la carte, l'algorithme RSA. La signature ainsi calculée est chargée dans une région 14 située de préférence dans la mémoire 7. La région 14 peut être accessible en permanence en lecture : elle n'a pas besoin d'être particulièrement protégée. Elle peut même être accessible en écriture : toute modification injustifiée de son contenu amenant l'échec de l'utilisation envisagée de l'application. On peut aussi utiliser pour élaborer la signature un code secret dédié à cet usage dans la carte. Ce code pourrait être chargé dans la carte au moment de ce conditionnement.

Lors de l'utilisation, lors de l'insertion de la carte 1 dans la fente 15 du lecteur 13, la mise en marche du circuit provoque, comme première instruction, le cas échéant le chargement du programme de l'application dans la mémoire de travail 5. Une fois que ce programme a été chargé dans la mémoire 5, le microprocesseur 3 met irrémédiablement en oeuvre, au moyen de l'algorithme de chiffrement RSA stocké dans la région 11, d'une manière interne cette fois, l'élaboration de la signature. L'élaboration en interne par le microprocesseur 3 de la signature consiste à aller chercher d'une part le code secret stocké dans la région 10, éventuellement aussi l'identification située dans une région 16, et les instructions du programme soit stockées dans la région 12 de la mémoire 6 soit stockées dans la mémoire 5 et à faire les calculs de chiffrement sur ces données. Une fois que le microprocesseur 3 a terminé son élaboration, il provoque aussi irrémédiablement par l'instruction 17 la lecture de la signature stockée dans la région 14 de la mémoire 9. Cette signature lue dans la région 14 est ensuite comparée, au cours d'une instruction de comparaison stockée dans une région 18 de la mémoire 6, à la signature élaborée. Cette comparaison est faite bit à bit. Selon le succès ou l'échec de cette comparaison, il sera édité un signal de validation du fonctionnement du microprocesseur, ou au contraire d'invalidation.

En définitive, la mise en oeuvre de l'invention nécessite, de préférence au préalable c'est-à-dire au démarrage du microcircuit, l'exécution du calcul de l'algorithme selon des instructions contenues dans la région 11, puis la lecture de la signature et enfin l'exécution de la comparaison situé dans la région 16. Le chargement du programme dans la mémoire de travail 5 peut être effectuée après ces trois opérations, en cas de succès seulement bien entendu. Il suffit donc dans ce cas de réaliser, en fabrication, des microprocesseurs tels qu'au démarrage ils aillent pointer directement sur la première instruction située dans la région 11. Sinon il faut que leur première instruction soit le chargement en mémoire RAM au moins des instructions 11, 17 et 18. Plutôt qu'une vérification unique faite en début de programme, on peut prévoir des vérifications plus régulières au cours du déroulement de ce programme, par exemple après l'exécution à chaque fois de dix instructions, ou même sous l'autorité du lecteur qui provoque l'utilisation du programme.

On constate donc que la vérification de la cohérence du programme avec la carte s'effectue d'une manière interne, sans intervention quelconque de l'opérateur.

On a dit que la carte était destinée à permettre les relations avec le monde extérieur quel qu'il soit. Il serait donc possible à un fraudeur de créer son propre programme (qui serait évidemment un programme nuisible à un émetteur que ce fraudeur voudrait voler). On peut même admettre qu'il serait possible à ce fraudeur de connaître le code secret ainsi que l'identification de la carte, et par ailleurs, les algorithmes RSA étant connus et accessibles au public, de charger lui même une signature dans la mémoire 7 et de tenter de rendre ainsi cette vérification et cette validation illusoires. Pour éviter cette situation, on peut prévoir, lorsque la carte 1 est en relation avec le monde extérieur que ce monde extérieur substitue ses instructions, cohérentes, à celles du microcircuit 2 pour calculer la signature.

L'invention peut trouver une application dans le domaine des télévisions à péage. Dans une télévision à péage, le signal de base de temps du signal vidéo peut être considéré comme avancé ou retardé dans le temps, pour chacune des lignes d'image, en fonction d'un codage particulier. Sans intervention sur le signal vidéo montré sur le poste de télévision, les lignes sont décalées les unes des autres et l'image brouillée. Il est possible de resynchroniser l'instant du départ du balayage de chaque ligne au moyen d'un automate qui en affecte le retard ou l'avance de façon inverse au brouillage.

Cet automate exécute un algorithme de calcul sur un mot code. Le résultat de ce calcul constitue la séquence des retards et avances sur une trame du mode télévision. On peut admettre que tous les mois le mode de brouillage change et que par conséquent pour débrouiller son image chaque abonné doit rentrer un nouveau mot code dans l'automate. Ce nouveau mot code est transmis à l'abonné par la chaîne de télévision à péage, sous réserve, qu'il soit à jour de son abonnement. Le problème à résoudre est le problème résultant de la divulgation de l'algorithme de l'automate. La société de gestion des décodeurs de télévision à péage peut alors vouloir périodiquement changer le mode de fonctionnement de ses automates : changer cet algorithme. Plutôt que d'avoir à changer les décodeurs eux-mêmes, qui sont des pièces chères, il est envisagé de mettre l'intelligence des automates dans des cartes à microcircuits. Donc le changement du mode de fonctionnement de l'automate reviendrait à changer ces cartes. Cependant, cette solution étant elle même trop chère, il est prévu avec l'invention de recharger un autre algorithme dans les cartes par les émissions hertziennes elles mêmes. On se trouve donc, dans ce cas, dans la situation où le programme exécutable doit être chargé non plus dans une mémoire quine pourrait être accessible qu'en lecture, telle que la mémoire 6, mais dans une mémoire telle que la mémoire 8 qui doit même être accessible en écriture. Le programme chargé est donc public.

Ainsi, de préférence, le programme est donc chargé dans une mémoire programmable et effaçable 8. De préférence, le code secret utilisé pour la signature est un code secret spécifique à l'élaboration de cette signature, ce code secret pouvant être différent du code secret qu'utilise le porteur pour valider l'utilisation de sa carte. Il est par ailleurs possible de rendre spécifique chaque programme pour chaque carte (ou pour des groupes de cartes possédant une même identification).

La mise en oeuvre de l'invention est la suivante dans le cas de l'application de télévision. L'émetteur émet, par voie hertzienne, un message spécifique à destination de chaque carte. Ce message comporte d'une part une identification IN de la carte et d'autre part les nouvelles instructions NL de l'algorithme et la nouvelle signature SN. Cette nouvelle signature SN comporte alors nécessairement une participation de l'identification IN de la carte à son élaboration. Ou bien cette signature SN comporte une participation du code secret CS de la carte à son élaboration. Voire les deux. Chez le client N, le programme principal du microprocesseur de la carte ou du décodeur comporte alors une option pour se mettre en acceptation de modification. Dans cet état, le décodeur se met en modification dès qu'il reconnaît dans les ondes émises son identification IN. Lorsque l'identification IN d'une carte est reconnue, le microprocesseur accepte le nouveau programme NL et la nouvelle signature SN. La reconnaissance de l'identification se fait par comparaison d'une identification émise sur les ondes hertziennes avec l'identification présente dans la carte. Le protocole de modification est lui aussi un protocole figé : le microprocesseur ne rend la main que lorsque toute la modification est terminée. Une fois cette modification effectuée, la carte contient le nouveau programme de l'algorithme NL et la nouvelle signature SN. Le nouveau programme peut avoir été remplacé en tout ou partie. Pour valider le fonctionnement, lors de la mise en service du décodeur, le microprocesseur de la carte calcule une nouvelle signature S'N sur la base des nouvelles instructions NL, de son identification IN, et, éventuellement, du code secret CS. Si S'N est le même que SN la validation se produit. Elle ne se produit plus dans le cas contraire.

Bien entendu, la chaîne de télévision n'émet pas de message spécifique pour les abonnés quine sont pas à jour du règlement de leur facture.

Pour assurer la transmission du nouvel algorithme, un temps de 0,1 seconde par abonné est suffisant. Cinq millions d'abonnés peuvent être desservis en cinq jours. Ceci peut même être plus rapide si on utilise des réémetteurs distribués sur le territoire pour partager le travail. Afin d'assurer une permanence d'écoute, on peut prévoir que chaque carte comporte deux algorithmes et que le décodeur est capable de choisir seul celui des deux qui est le bon. Ainsi, chaque abonné peut avoir l'algorithme Aₙ et Aₙ₊₁. Pendant que la chaîne émet avec un codage correspondant à Aₙ₊₁ on remplace, par voie hertzienne, Aₙ par Aₙ₊₂.

## Revendications

1. Procédé de gestion d'un programme d'application chargé dans un support à microcircuit (2) comportant les étapes suivantes :
a) pour charger le programme d'application :
- on élabore une signature chiffrée fonction d'un code secret (10) du microcircuit et de certaines instructions du programme,
- on charge cette signature dans une mémoire (14) programmable du microcircuit,
- on charge le programme dans une mémoire programme (12) du microcircuit,
b) quand le programme d'application doit être exécuté:
- on fait élaborer (11) par le microprocesseur du microcircuit, avant l'exécution du programme d'application, une autre signature chiffrée,
- on compare (17,18) cette signature, et
- on autorise le déroulement du programme en fonction du résultat de cette comparaison.

2. Procédé selon la revendication 1 caractérisé en ce qu'on stocke le programme dans une mémoire (7) programmable et effaçable.

3. Procédé selon l'une quelconque des revendications 1 ou 2 caractérisé en ce qu'on charge un code secret dans le microcircuit, ce code étant dédié à l'élaboration de cette signature.

4. Procédé selon la revendication 2, caractérisé en ce qu'on élabore l'autre signature et en ce qu'on compare cette signature seulement au moment du chargement du programme d'application dans la mémoire de travail.

5. Procédé selon l'une quelconque des revendications 1 à 4 caractérisé en ce qu'on élabore d'abord l'autre signature et en ce qu'on compare une signature plusieurs fois pendant l'exécution du programme.

6. Procédé selon les revendications 1 à 5 caractérisé en ce qu'on charge la signature élaborée dans une zone mémoire du microcircuit qui ne peut qu'être lue d'une manière interne.

7. Procédé selon les revendications 1 à 6 caractérisé en ce qu'on élabore les signatures également en fonction d'un code d'identification contenu dans la carte.

## Patentansprüche

1. Verfahren zur Verwaltung eines in einen Mikroschaltungs-Datenträger (2) geladenen Anwenderprogramms mit den folgenden Schritten:
a) zum Laden des Anwenderprogramms:
- wird eine chiffrierte Signatur gebildet, die von einem geheimen Code (10) der Mikroschaltung und von bestimmten Befehlen des Programms abhängt,
- diese Signatur wird in einen programmierbaren Speicher (14) der Mikroschaltung geladen,
- das Programm wird in einen Programmspeicher (12) der Mikroschaltung geladen,
b) wenn das Anwenderprogramm ausgeführt werden soll:
- läßt man durch den Mikroprozessor der Mikroschaltung vor der Ausführung des Anwenderprogramms eine weitere chiffrierte Signatur bilden (11),
- diese Signatur wird verglichen (17,18),
- der Ablauf des Programms wird in Abhängigkeit von dem Ergebnis dieses Vergleichs zugelassen.

2. Verfahren nach Anspruch 1, dadurch gekennzeichnet, daß das Programm in einem programmierbaren und löschbaren Speicher (7) gespeichert wird.

3. Verfahren nach einem der Ansprüche 1 oder 2, dadurch gekennzeichnet, daß ein geheimer Code in die Mikroschaltung geladen wird, wobei dieser Code der Bildung der Signatur gewidmet ist.

4. Verfahren nach Anspruch 2, dadurch gekennzeichnet, daß die Bildung der weiteren Signatur und der Vergleich dieser Signatur erst im Augenblick des Ladens des Anwenderprogramms in den Arbeitsspeicher erfolgt.

5. Verfahren nach einem der Ansprüche 1 bis 4, dadurch gekennzeichnet, daß zunächst die weitere Signatur gebildet wird und daß eine Signatur während der Ausführung des Programms mehrere Male verglichen wird.

6. Verfahren nach einem der Ansprüche 1 bis 5, dadurch gekennzeichnet, daß die gebildete Signatur in eine Speicherzone der Mikroschaltung geladen wird, die auf interne Weise nicht abgelesen werden kann.

7. Verfahren nach einem der Ansprüche 1 bis 6, dadurch gekennzeichnet, daß die Signaturen auch in Abhängigkeit von einem in der Karte enthaltenen Identifikations-Code gebildet werden.

## Claims

1. A method for the management of an application program loaded in a microcircuit-based medium (2), comprising the following steps:
(a) to load the application program:
- an encrypted signature is prepared as a function of a secret code (10) of the microcircuit and certain instructions of the program;
- this signature is loaded into a programmable memory (14) of the microcircuit;
- the program is loaded into a program memory (12) of the microcircuit;
(b) when the application program is to be executed:
- before the execution of the application program, the microprocessor of the microcircuit is made to prepare (11) another encrypted signature;
- this signature is compared (17, 18); and
- the program is allowed to run on according to the result of this comparison.

2. A method according to claim 2, characterised in that the program is stored in an erasable programmable memory (7).

3. A method according to either of the claims 1 or 2, characterised in that a secret code is loaded into the circuit, this code being dedicated to the preparation of this signature.

4. A method according to claim 2, characterised in that the other signature is prepared and wherein this signature is compared only when the application program is loaded into the working memory.

5. A method according to any of the claims 1 to 4, characterised in that first of all the other signature is prepared and wherein a signature is compared several times during the execution of the program.

6. A method according to claims 1 to 5, characterised in that the prepared signal is loaded into a memory region of the microcircuit which region can only be read internally.

7. A method according to claims 1 to 6, characterised in that signals are prepared also as a function of an identification code contained in the card.
